# EUROPEAN PATENT SPECIFICATION

(11) **EP 3 190 571 B1**
(45) Date of publication and mention of the grant of the patent: **05.06.2019**
(21) Application number: 17150314.7
(22) Date of filing: 04.01.2017
(51) Int. Cl.: G08C 17/02

(54) **IMAGE DISPLAY APPARATUS AND METHOD OF OPERATING THE SAME**
BILDANZEIGEVORRICHTUNG UND VERFAHREN ZU DEREN BETRIEB
AFFICHEUR D'IMAGES ET PROCÉDÉ DE FONCTIONNEMENT CORRESPONDANT

(30) Priority: 05.01.2016 KR 20160001009
(43) Date of publication of application: 12.07.2017
(73) Proprietor: Samsung Electronics Co., Ltd., Gyeonggi-do 16677 (KR)
(72) Inventor: KIM, Byuk-sun, Seoul (KR); LEE, Ji-hyo, Gyeonggi-do (KR); SONG, Ki-hyun, Gyeonggi-do (KR)
(74) Representative: Taor, Simon Edward William

(56) References cited:
- EP-A1- 2 701 394

## Description

Apparatuses and methods consistent with exemplary embodiments broadly relate to a display apparatus and operating the same, and more particularly, to image display apparatuses capable of conveniently setting universal remote controls and methods of operating the image display apparatuses.

Image display apparatuses refer to apparatuses for displaying images to users. Users may watch broadcasts through image display apparatuses. Image display apparatuses display, on displays, broadcasts selected by users from among broadcast signals transmitted from broadcasting stations.

Also, smart TVs for displaying various types of content in addition to broadcasts are provided. Smart TVs aim to analyze users' needs and provide content according to users' needs without users' manipulations, instead of being manually operated according to the users' selections.

When peripheral devices such as a Blu-ray disc player, a set-top box, a digital versatile disk (DVD) player, a streaming device, a home theater, and an audio device are connected to an image display apparatus such as a TV, the image display apparatus and the peripheral devices may be controlled by using one universal remote control. However, in this case, a user has to manually set the universal remote control by directly inputting a control signal while checking a change on a screen.

Provided are image display apparatuses capable of conveniently setting universal remote controls for controlling the image display apparatuses and peripheral devices connected to the image display apparatuses and methods of operating the image display apparatuses.

Publication EP 2 701 394 is one example for such an image display apparatus.

Additional aspects will be set forth in part in the description which follows and, in part, will be apparent from the description, or may be learned by practice of exemplary embodiments. Exemplary embodiment may overcome the above disadvantages and other disadvantages not described above. Also, exemplary embodiments are not required to overcome the disadvantages described above, and an exemplary embodiment need not overcome any of the problems described above.

According to an aspect of an exemplary embodiment, an image display apparatus includes: a communication interface configured to transmit a control signal for controlling a peripheral device connected to the image display apparatus and receive an image corresponding to the control signal from the peripheral device; a display configured to display the received image; and a controller configured to extract peripheral device information by analyzing the received image and determine remote control code information corresponding to the peripheral device based on the extracted peripheral device information, wherein the communication interface is further configured to transmit the remote control code information to a control device.

The control signal for controlling the peripheral device may be a signal for displaying the image including the peripheral device information on the display.

The communication interface may further be configured to transmit the control signal to the control device or the peripheral device.

The controller may further be configured to recognize or detect at least one of text, a logo, and a picture, in the image and extract the peripheral device information based on the recognized or detected at least one of the text, the logo, and the picture.

The peripheral device information may include at least one of a manufacturer name of the peripheral device, a business name of the peripheral device, and a model name of the peripheral device.

The image display apparatus may further include a storage configured to store the remote control code information corresponding to the peripheral device.

The controller may be further configured to detect a change in the image displayed on the display and determine the remote control code information corresponding to the peripheral device for the change in the image.

The controller may further be configured to recognize or detect a menu item for displaying the peripheral device information, in the image and move a focus displayed on the display to the detected menu item and transmit to the control device a new control signal corresponding to the move in the focus.

The controller may further be configured to extract setting information of the peripheral device by analyzing the image and set information of the image display apparatus based on the extracted setting information of the peripheral device.

The information of the image display apparatus may include at least one of Internet information, region information, channel information, and electronic program guide (EPG) information.

The controller may further be configured to control the display to display information that is not automatically set from among the information of the image display apparatus and a guide screen for setting the information that is not automatically set.

According to an aspect of yet another exemplary embodiment, a method of operating an image display apparatus includes: transmitting a control signal for controlling a peripheral device connected to the image display apparatus; receiving an image corresponding to the transmitted control signal from the peripheral device; displaying the received image; extracting peripheral device information by analyzing the received image; determining remote control code information corresponding to the peripheral device based on the extracted peripheral device information; and transmitting the remote control code information to a control device.

The transmitting of the control signal may include transmitting the control signal to the control device or the peripheral device.

The extracting of the peripheral device information may include: recognizing or detecting at least one of text, a logo, and a picture, in the image; and extracting the peripheral device information based on the recognized or detected at least one of the text, the logo, and the picture.

The method may further include storing in a memory the remote control code information corresponding to the peripheral device.

The method may further include detecting a change in the image displayed on a display and determining the remote control code information corresponding to the peripheral device with respect to the changed image.

The method may further include: recognizing or detecting a menu item for displaying the peripheral device information, in the image; and transmitting to the control device a control signal for moving a focus displayed on a display to the menu item.

The method may further include: extracting setting information of the peripheral device by analyzing the image; and setting information of the image display apparatus based on the extracted setting information of the peripheral device.

The method may further include displaying information that is not automatically set from among the information of the image display apparatus and a guide screen for setting the information that is not automatically set.

These and/or other aspects will become more apparent and more readily appreciated from the following description of exemplary embodiments, taken in conjunction with the accompanying drawings, in which:
FIG. 1 is a view illustrating an image display apparatus, a control device, and a peripheral device according to an exemplary embodiment;
FIG. 2 is a block diagram illustrating a configuration of the image display apparatus according to an exemplary embodiment;
FIG. 3 is a block diagram illustrating a configuration of an image display apparatus according to another exemplary embodiment;
FIG. 4 is a block diagram illustrating a configuration of the control device according to an exemplary embodiment;
FIG. 5 is a flowchart illustrating a method of operating the image display apparatus according to an exemplary embodiment;
FIG. 6 is a flow diagram illustrating a method of setting a universal remote control in order to control the image display apparatus and the peripheral device by using one control device according to an exemplary embodiment;
FIG. 7 is a view illustrating a method of setting a universal remote control according to an exemplary embodiment;
FIG. 8 is a view illustrating a method of setting a universal remote control according to an exemplary embodiment;
FIGS. 9A and 9B are views illustrating a method of setting a universal remote control according to an exemplary embodiment;
FIG. 10 is a flowchart illustrating a method of operating the image display apparatus according to an exemplary embodiment;
FIGS. 11A and 11B are views illustrating a process of setting Internet information of the image display apparatus according to an exemplary embodiment; and
FIGS. 12A through 12C are views illustrating a process of setting region information of the image display apparatus according to an exemplary embodiment.

The terms used in the present disclosure are briefly described and exemplary embodiments are described in detail.

The terms used in exemplary embodiments are selected from among common terms that are currently widely used in consideration of their function in exemplary embodiments. However, the terms may be different according to an intention of one of ordinary skill in the art, a precedent, or the advent of new technology. Also, in particular cases, the terms are discretionally selected by the applicant of an inventive concept, and the meaning of those terms will be described in detail in the corresponding part of the detailed description of exemplary embodiments. Therefore, the terms used in an inventive concept are not merely designations of the terms, but the terms are defined based on the meaning of the terms and content throughout exemplary embodiments.

Throughout the present application, when a part "includes" an element, it is to be understood that the part additionally includes other elements rather than excluding other elements as long as there is no particular opposing recitation. Also, the terms such as "... unit", "module", or the like used in the present application indicate a unit, which processes at least one function or motion, and the unit may be implemented by hardware or software, or by a combination of hardware and software.

Exemplary embodiments will now be described more fully with reference to the accompanying drawings for one of ordinary skill in the art to be able to perform exemplary embodiments without any difficulty. The inventive concept may, however, be embodied in many different forms and should not be construed as being limited to exemplary embodiments set forth herein; rather, these exemplary embodiments are provided so that this disclosure will be thorough and complete, and will fully convey the inventive concept to one of ordinary skill in the art. Also, parts in the drawings unrelated to the detailed description are omitted to ensure clarity of an inventive concept. Like reference numerals in the drawings denote analogous elements, and thus their description will not be repeated.

As used herein, the term "and/or" includes any and all combinations of one or more of the associated listed items. Expressions such as "at least one of' when preceding a list of elements, modify the entire list of elements and do not modify the individual elements of the list.

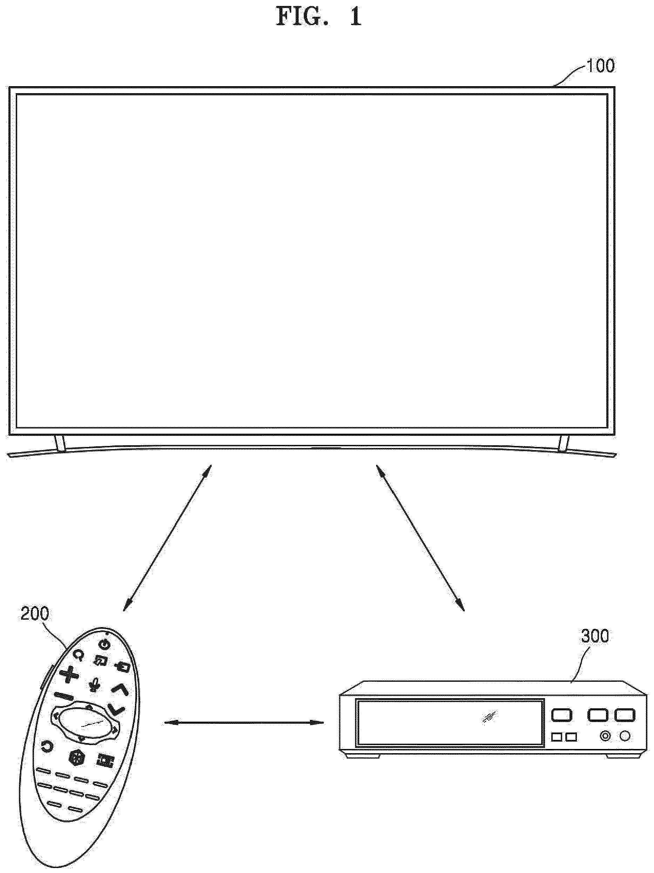

FIG. 1 is a view illustrating an image display apparatus 100, a control device 200, and a peripheral device 300 according to an exemplary embodiment.

Although the image display apparatus 100 may be a TV as shown in FIG. 1, exemplary embodiments are not limited thereto and the image display apparatus 100 may be an electronic device including a display. For example, the image display apparatus 100 may be any of various electronic devices such as a cell phone, a tablet personal computer (PC), a digital camera, a camcorder, a laptop computer, a desktop computer, an e-book reader, a digital broadcast terminal, a personal digital assistant (PDA), a portable multimedia player (PMP), a navigation system, an MP₃ player, or a wearable device. In particular, although the image display apparatus 100 may be easily realized as a display device including a large display such as TV, exemplary embodiments are not limited thereto.

Also, the image display apparatus 100 may be a static image display apparatus or a dynamic image display apparatus, and may be a digital broadcast receiver that may receive a digital broadcast. Also, the image display apparatus 100 may be a flat display device, a curved display device whose screen has a curvature, or a flexible display device whose curvature is adjustable. An output resolution of the image display apparatus 100 may be, for example, a high definition (HD), a full HD, or an ultra HD, or a resolution that is higher than an ultra HD.

The peripheral device 300, according to an exemplary embodiment, may be a reproduction device that reproduces multimedia content. Examples of the peripheral device 300 may include, but is not limited to, a Blu-ray disc player, a set-top box, a digital versatile disk (DVD) player, a streaming device, a home theater, and an audio device. Alternatively, the peripheral device 300 may be realized as any of various electronic devices such as a smart phone, a tablet PC, a mobile phone, a video phone, an e-book reader, a desktop PC, a laptop PC, a netbook computer, a PDA, a PMP, an MP₃ player, or a wearable device.

The image display apparatus 100 and the peripheral device 300 according to an exemplary embodiment may transmit/receive data, a signal, etc. through wired/wireless communication. For example, the peripheral device 300 may transmit an image signal to the image display apparatus 100 and the image display apparatus 100 may display an image based on the received image signal.

The control device 200 may be realized as any of various devices for controlling the image display apparatus 100, for example, a remote controller or a remote control, or a cell phone. The control device 200 according to an exemplary embodiment may control the image display apparatus 100 by using remote control code information of the image display apparatus 100. The remote control code information according to an exemplary embodiment may be an infrared (IR) key codeset.

Also, the control device 200 according to an exemplary embodiment may be set as a universal remote control and may control the peripheral device 300 as well as the image display apparatus 100. For example, the control device 200 may store code information corresponding to the peripheral device 300 and may control the peripheral device 300 by using remote control code information corresponding to the peripheral device 300.

Also, the control device 200 may control the image display apparatus 100 and the peripheral device 300 through short-range communication such as IR or Bluetooth. The control device 200 may control functions of the image display apparatus 100 and the peripheral device 300 by using at least one of keys (including buttons), a touchpad, a microphone (not shown) that may receive a user's voice, and a sensor (not shown) that may recognize a motion of the control device 200.

The control device 200 may include a power on/off button for turning on or off the image display apparatus 100 and the peripheral device 300. The control device 200 may change channels of the image display apparatus 100 and the peripheral device 300, may adjust a volume, may select terrestrial broadcasting, cable broadcasting, or satellite broadcasting, or may perform setting according to a user input.

The term "user" used herein refers to a person who controls a function or an operation of the image display apparatus 100 or the peripheral device 300 by using the control device 200. Examples of the user may include a viewer, a manager, and an installation engineer.

The image display apparatus 100 according to an exemplary embodiment may determine remote control code information corresponding to the peripheral device 300 by analyzing an image received from the peripheral device 300. Also, the image display apparatus 100 according to an exemplary embodiment may analyze the image received from the peripheral device 300, extract setting information of the peripheral device 300, and automatically set information of the image display apparatus 100 based on the extracted setting information.

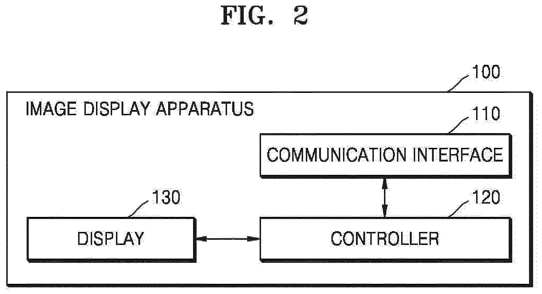

FIG. 2 is a block diagram illustrating a configuration of the image display apparatus 100 according to an exemplary embodiment.

Referring to FIG. 2, the image display apparatus 100 may include a communication interface 110, a controller 120, and a display 130.

The communication interface 110 may transmit/receive data or a signal to/from an external device (e.g., the control device 200 or the peripheral device 300) under the control of the controller 120.

The communication interface 110 may transmit/receive data or a signal by using at least one method from among wireless LAN (e.g., Wi-Fi), Bluetooth, wired Ethernet, IR, Bluetooth low energy (BLE), ultrasound, ZigBee, high-definition multimedia interface (HDMI), and HDMI-consumer electronics control (CEC) according to a performance and a structure of the image display apparatus 100.

The communication interface 110 according to an exemplary embodiment may transmit a control signal for controlling the peripheral device 300 to the control device 200 or the peripheral device 300 under the control of the controller 120.

Also, the communication interface 110 according to an exemplary embodiment may receive an image signal from the peripheral device 300. For example, the peripheral device 300 may receive a control signal from the control device 200 or the image display apparatus 100, may generate an image signal corresponding to the control signal, and may transmit the generated image signal to the image display apparatus 100 through an HDMI cable. However, exemplary embodiments are not limited thereto.

Also, the communication interface 110 may transmit remote control code information corresponding to the peripheral device 300 to the control device 200.

The controller 120 according to an exemplary embodiment may process the image signal and may input the processed image signal to the display 130. Accordingly, an image corresponding to the image signal may be displayed on the display 120. Also, the controller 120 may control the image display apparatus 100 according to a user command or an internal program. A controller 120 is a processor, according to an exemplary embodiment.

The controller 120 according to an exemplary embodiment may control the communication interface 110 to transmit a control signal for controlling the peripheral device 300 to the control device 200 or the peripheral device 300. In this case, the control signal for controlling the peripheral device 300 may be a signal that enables peripheral device information or an image including setting information of the peripheral device 300 to be displayed on the display 130.

The controller 120 according to an exemplary embodiment may detect the peripheral device information or the setting information of the peripheral device 300 by analyzing the image received from the peripheral device 300. The controller 120 may detect the peripheral device information or the setting information of the peripheral device 300 by recognizing text, a logo, or a picture included in the received image.

For example, the peripheral device information may include a manufacturer, a model name, and/or a business name of the peripheral device 300. Also, the setting information of the peripheral device 300 may include Internet setting information of the peripheral device 300 and/or region information of the peripheral device 300. However, exemplary embodiments are not limited thereto.

Also, the controller 120 may determine remote control code information corresponding to the peripheral device 300 by using the detected peripheral device information. Also, the controller 120 may control information of the image display apparatus 100 to be automatically set based on the detected setting information of the peripheral device 300.

Also, the controller 120 may control the display 130 to display an item that is not automatically set from among the information of the image display apparatus 100 and a guide screen for setting the item that is not automatically set.

The display 130 converts an image signal, a data signal, an on-screen display (OSD) signal, or a control signal processed by the controller 120 and may generate a driving signal. The display 130 may be a plasma display panel (PDP), a liquid crystal display (LCD), an organic light-emitting diode (OLED), or a flexible display, or may be a three-dimensional (3D) display. Also, the display 130 may include a touch-screen and may be used as an input device in addition to an output device.

The display 130 according to an exemplary embodiment may display the image received from the peripheral device 300. In this case, the displayed image may be an image corresponding to a control signal, for example, a menu screen or an electronic program guide (EPG) screen provided from the peripheral device 300. However, exemplary embodiments are not limited thereto, and the displayed image may be a screen including the peripheral device information or the setting information of the peripheral device 300.

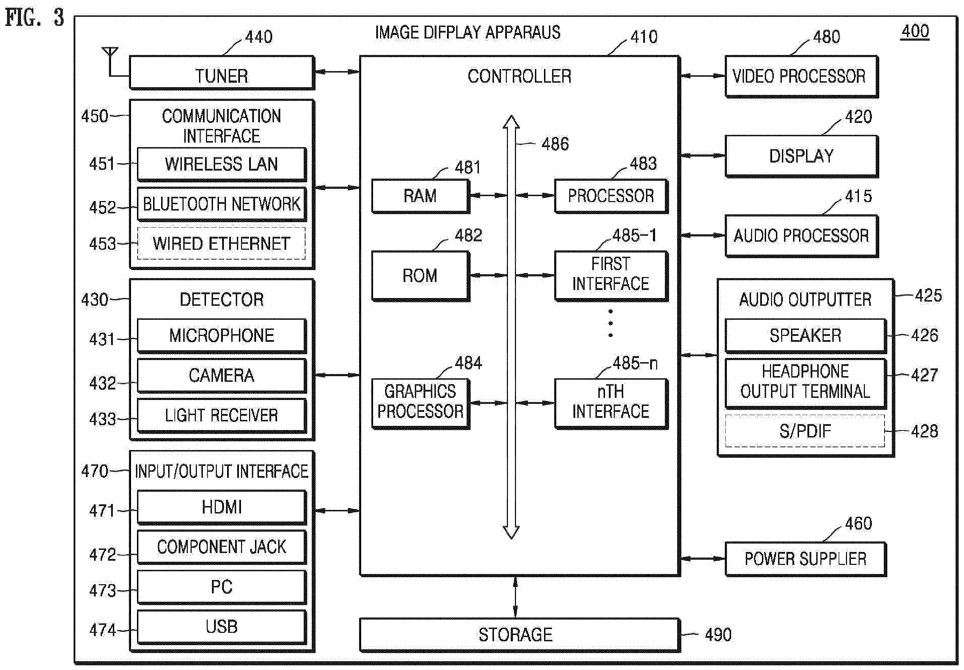

FIG. 3 is a block diagram illustrating a configuration of an image display apparatus 400 according to another exemplary embodiment. The image display apparatus 400 of FIG. 3 may be a modification of the image display apparatus 100 of FIG. 1.

Referring to FIG. 3, the image display apparatus 400 according to an exemplary embodiment may further include a detector 430, a video processor 480, an audio processor 415, an audio outputter 425, a power supplier 460, a tuner 440, an input/output interface 470, and a storage 490 in addition to a controller 410, a display 420, and a communication interface 450.

The communication interface 110 of FIG. 2 may correspond to the communication interface 450 and the input/output interface 470 of FIG. 3, the controller 120 of FIG. 2 may correspond to the controller 410 of FIG. 3, and the display 130 of FIG. 2 may correspond to the display 420 of FIG. 3. The same description as that made with reference to FIG. 2 will not be given.

The video processor 480 processes video data received by the image display apparatus 400. The video processor 480 may perform any of various image processing operations such as decoding, scaling, noise filtering, frame rate transformation, or resolution transformation on the video data.

The display 420 displays a video included in a broadcast signal received through the tuner 440 on a screen under the control of the controller 410. Also, the display 420 may display content (e.g., a moving picture) input through the communication interface 450 or the input/output interface 470. The display 420 may output an image stored in the storage 490 under the control of the controller 410. Also, the display 420 may display a voice user interface (UI) (e.g., including a voice command guide) for performing a voice recognition task corresponding to voice recognition or a motion UI (e.g., including a user motion guide) for performing a motion recognition task corresponding to motion recognition.

The audio processor 415 processes audio data. The audio processor 415 may perform any of various processing operations such as decoding, amplification, or noise filtering on the audio data. The audio processor 415 may include a plurality of audio processing modules to process audios corresponding to a plurality of pieces of content.

The audio output interface 425 outputs an audio included in a broadcast signal received through the tuner 440 under the control of the controller 410. The audio output interface 425 may output an audio (e.g., a voice or a sound) input through the communication interface 450 or the input/output interface 470. Also, the audio output interface 425 may output an audio stored in the storage 490 under the control of the controller 410. The audio output interface 425 may include at least one of a speaker 426, a headphone output terminal 427, and a Sony/Philips digital interface (S/PDIF) output terminal 428. The audio output interface 425 may include a combination of the speaker 426, the headphone output terminal 427 and the S/PDIF output terminal 428.

The power supplier 460 supplies power input from an external power source to internal elements of the image display apparatus 400 under the control of the controller 410. Also, the power supplier 460 may supply power output from one or more batteries provided in the image display apparatus 400 to the internal elements of the image display apparatus 400 under the control of the controller 410.

The tuner 440 may tune and select only a frequency of a channel which the image display apparatus 400 wants to receive from among many radio wave components obtained by amplifying, mixing, or resonating a wired or wireless broadcast signal. The broadcast signal includes an audio, a video, and additional information (e.g., an EPG).

The tuner 440 may receive a broadcast signal in a frequency band corresponding to a channel number (e.g., a cable broadcasting number 506) according to a user input (for example, a control signal received from the control device 200, e.g., a channel number input, a channel up-down input, or a channel input on an EPG screen image).

The tuner 440 may receive a broadcast signal from various sources such as terrestrial broadcasting, cable broadcasting, satellite broadcasting, and Internet broadcasting. The tuner 440 may receive a broadcast signal from a source such as analog broadcasting or digital broadcasting. The broadcast signal received through the tuner 440 may be decoded (e.g., through audio decoding, video decoding, or additional information decoding) into an audio, a video, and/or additional information. The audio, the video, and/or the additional information may be stored in the storage 490 under the control of the controller 410.

The number of the tuner(s) 440 of the image display apparatus 400 may be one or more. The tuner 440 may be integrally formed as all-in-one with the image display apparatus 400 or may be realized as a separate device (e.g., a tuner (not shown) connected to the input/output interface 470 or a set-top box (not shown)) including a tuner that is electrically connected to the image display apparatus 400.

The communication interface 450 may connect the image display apparatus 400 to an external device (e.g., the peripheral device 300) under the control of the controller 410. The controller 410 may transmit/receive content to the external device that is connected through the communication interface 450, may download an application from the external device, or may perform web-browsing. The communication interface 450 may include a wireless local area network (LAN) 451, a Bluetooth network 452, or a wired Ethernet 453 according to the performance and structure of the image display apparatus 400. The communication interface 450 may include a combination of the wireless LAN 451, the Bluetooth network 452, and the wired Ethernet 453. The communication interface 450 may receive a control signal of the control device 200 under the control of the controller 410. The control signal may be a Bluetooth signal, a radio frequency (RF) signal, or a Wi-Fi signal.

The communication interface 450 may further use a short-range communication method, for example, near field communication (NFC, not shown) or Bluetooth low energy (BLE, not shown), in addition to Bluetooth.

The detector 430 detects a user's voice, image, or interaction.

A microphone 431 receives a voice uttered by the user. The microphone 431 may convert the received voice into an electrical signal and may output the electrical signal to the controller 410. The user's voice may include, for example, a voice corresponding to a menu or a function of the image display apparatus 400. The microphone 431 may be integrated with or separate from the image display apparatus 400. When the microphone 431 is separate from the image display apparatus 400 the microphone 431 may be electrically connected to the image display apparatus 400 through the communication interface 450 or the input/output interface 470.

It will be easily understood by one of ordinary skill in the art that the microphone 431 may be omitted according to the performance and structure of the image display apparatus 400 in an exemplary embodiment.

A camera 432 receives an image (e.g., consecutive frames) corresponding to the user's motion including a gesture in a recognition range of the camera 162. The user's motion may include, for example, a motion of a body part of the user, such as face, facial expression, hand, fist, or finger. The camera 432 may convert the received image into an electrical signal and may output the electrical signal to the controller 410 under the control of the controller 410.

The controller 410 may select a menu displayed on the image display apparatus 400 by using a result of the motion recognition, or may perform control corresponding to the result of the motion recognition. For example, the controller 410 may adjust a channel, may adjust a volume, may move an indicator, or may move a cursor.

The camera 432 may include a lens (not shown) and an image sensor (not shown). The camera 432 may support optical zoom or digital zoom by using a plurality of lenses and image processing. The recognition range of the camera 432 may be set in various ways according to an angle of the camera 432 and an environment condition. When the camera 432 includes a plurality of cameras, the camera 432 may receive a 3D still image or a 3D motion by using the plurality of cameras.

The camera 432 may be integrated with or separate from the image display apparatus 400. When the camera 432 is separate from the image display apparatus 400 an additional device (not shown) including the camera 432 may be electrically connected to the image display apparatus 400 through the communication interface 450 or the input/output interface 470.

It will be easily understood by one of ordinary skill in the art that the camera 432 may be omitted according to the performance and structure of the image display apparatus 400 in an exemplary embodiment.

A light receiver 433 receives an optical signal (including a control signal) from the control device 200 through a light window (not shown) in or on a bezel of the display 120. The light receiver 433 may receive an optical signal corresponding to a user input (e.g., a touch, a pressing, a touch gesture, a voice, or a motion) from the control device 200. A control signal may be extracted from the received optical signal under the control of the controller 410.

The input/output interface 470 receives a video (e.g., a moving picture), an audio (e.g., a voice or a song), and additional information (e.g., an EPG) from the outside of the image display apparatus 400 under the control of the controller 410. The input/output interface 470 may include at least one of an HDMI port 471, a component jack 472, a PC port 473, and a universal serial bus (USB) port 474. The input/output interface 470 may include a combination of the HDMI port 471, the component jack 472, the PC port 473, and the USB port 474.

It will be easily understood by one of ordinary skill in the art that the input/output interface 470 may have any of various configurations and operations according to an exemplary embodiment.

The controller 410 controls an overall operation of the image display apparatus 400 and signal transfer between the internal elements of the image display apparatus 400 and processes data. When there is the user's input or a condition that is preset and stored is satisfied, the controller 410 may execute an operating system (OS) and various applications that are stored in the storage 490.

The controller 410 may include a random-access memory (RAM) 481 that stores data or a signal input from the outside of the image display apparatus 400 or is used as a memory area for various operations performed by the image display apparatus 400 a read-only memory (ROM) 482 that stores a control program for controlling the image display apparatus 400 and a processor 483.

The processor 483 may include a graphics processing unit (not shown) for performing video graphics processing. The processor 483 may be realized as a system-on-chip (SoC) into which a core (not shown) and a GPU (not shown) are incorporated. The processor 483 may include a single-ore processor, a dual-core processor, a triple-core processor, a quad-core processor, or a multiple core-processor.

Also, the processor 483 may include a plurality of processors. For example, the processor 483 may include a main processor (not shown) and a sub-processor (not shown) that operates in a slip mode.

A graphics processor 484 generates a screen including various objects such as an icon, a picture, and text by using a calculation unit (not shown) and a rendering unit (not shown). The calculation unit calculates attribute values such as a coordinate value, a shape, a size, and a color of each object to be displayed according to a layout of the screen based on a user input that is detected by the detector 430. The rendering unit generates screens of various layouts including objects based on the attribute values calculated by the calculation unit. The screens generated by the rendering unit are displayed in a display area of the display 420.

First through nth interfaces 485-1 through 485-n are connected to the above various elements. One of the first through nth interfaces 485-1 through 485-n may be a network interface that is connected to an external device through a network.

The RAM 481, the ROM 482, the processor 483, the graphics processor 484, and the first through nth interfaces 485-1 through 485-n may be connected to one another via an internal bus 486.

The term "controller of the image display apparatus" used herein includes the processor 483, the ROM 482, and the RAM 481.

The storage 490 may store various pieces of data, programs, or applications for driving and controlling the image display apparatus 400 under the control of the controller 410. The storage 490 may be a memory, which stores data or signals input/output as the video processor 480, the display 420, the audio processor 415, the audio output interface 425, the power supplier 30, the tuner 440, the communication interface 450, the detector 430, and the input/output interface 470 operate. The storage 490 may store a control program for controlling the image display apparatus 400 and the controller 410, an application initially provided by a manufacturer or downloaded from the outside, a graphical user interface (GUI) associated with the application, objects (e.g., a picture, text, an icon, or a button) for providing the GUI, user information, documents, databases (DBs), or related pieces of data.

In an exemplary embodiment, the term "storage" includes the storage 490, the RAM 481 and the ROM 482 of the controller 410, or a memory card (e.g., a micro secure digital (SD) card or a USB memory (not shown)) mounted on the image display apparatus 400. Also, the storage 490 may include a nonvolatile memory, a volatile memory, a hard disk drive (HDD), or a solid-state drive (SSD).

The storage 490 may include a broadcast receiving module, a channel control module, a volume control module, a communication control module, a voice recognition module, a motion recognition module, a light receiving module, a display control module, an audio control module, an external input control module, a power control module, a power control module of an external device that is connected wirelessly (e.g., through Bluetooth), a voice DB, or a motion DB, which are not shown. The modules and the DBs of the storage 490 may be realized as software in order to perform a broadcast receiving control function, a channel control function, a volume control function, a communication control function, a voice recognition function, a motion recognition function, a light receiving control function, a display control function, an audio control function, an external input control function, a power control function, or a power control function of the external device that is connected wirelessly (e.g., through Bluetooth). The controller 410 may perform each function by using the software that is stored in the storage 490.

The storage 490 according to an exemplary embodiment may match at least one of text, a logo, and a picture corresponding to the peripheral device 300 to at least one of a manufacturer, a business name, and a model name of the peripheral device 300 and may store a matching result in a DB. Also, the storage 490 may store remote control code information corresponding to one or more external devices in the DB.

Also, the image display apparatus 400 including the display 420 may be electrically connected to a separate external device (e.g., a set-top box (not shown)) including a tuner. For example, it will be easily understood by one of ordinary skill in the art that the image display apparatus 400 may be realized as, but not limited to, an analog TV, a digital TV, a 3D TV, a smart TV, an LED TV, an OLED TV, a plasma TV, or a monitor.

The image display apparatus 400 may include a sensor (e.g., an illuminance sensor or a temperature sensor (not shown)) that detects an internal state or an external state of the image display apparatus 400.

The block diagrams of the image display apparatuses 100 and 400 of FIGS. 2 and 3 are block diagrams according to exemplary embodiments. Each element of the block diagrams may be integrated, added, or omitted according to the specification of the image display apparatus 100 or 400. That is, if necessary, two or more elements may be integrated into one element or one element may be divided into two elements. Also, a function performed by each block is for describing exemplary embodiments, and a detailed operation or apparatus does not limit the scope of an inventive concept and is provided for purposes of an example.

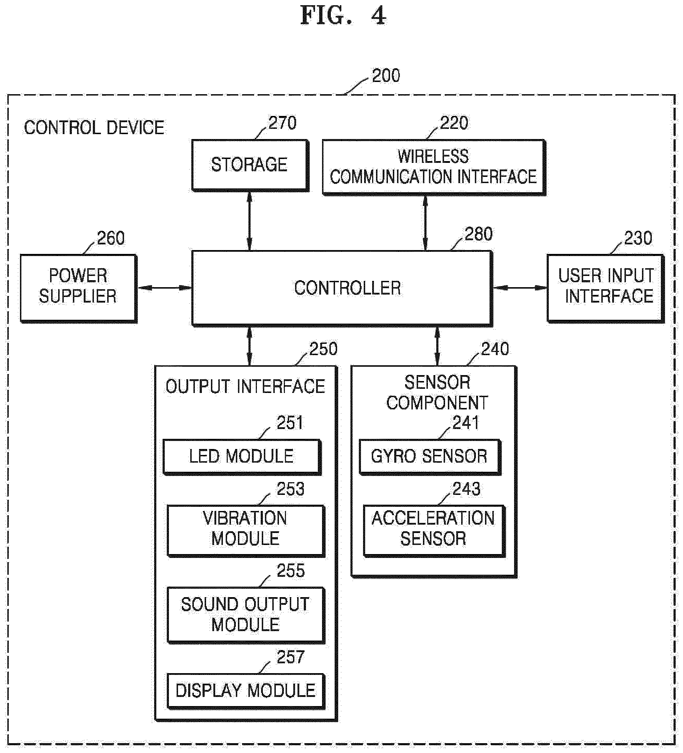

FIG. 4 is a block diagram illustrating a configuration of the control device 200 according to an exemplary embodiment.

Referring to FIG. 4, the control device 200 may include a wireless communication interface 220, a user input interface 230, a sensor component 240, an output interface 250, a power supplier 260, a storage 270, and a controller 280.

The wireless communication interface 220 may transmit/receive a signal to/from any one from among the image display apparatus 100 and the peripheral device 300 according to the above exemplary embodiments. The wireless communication interface 220 may include an IR module that may transmit/receive a signal to/from the image display apparatus 100 or the peripheral device 300 according to the IR communication standard. For example, if necessary, the control device 200 may transmit a command to turn on/off power, change a channel, or change a volume to the image display apparatus 100 or the peripheral device 300 through the IR module.

Alternatively, the wireless communication interface 220 may transmit/receive a signal to/from the image display apparatus 100 or the peripheral device 300 by using a method such as wireless LAN (e.g., Wi-Fi), Bluetooth, BLE, ultrasound, or ZigBee.

The control device 200 according to an exemplary embodiment may receive a control signal call command for controlling the peripheral device 300 from the image display apparatus 100 through the wireless communication interface 220. Also, the control device 200 may transmit a control signal corresponding to the control signal call command to the peripheral device 300.

The user input interface 230 may include a keypad, a button, a touchpad, or a touch-screen. A user may input a command related to the image display apparatus 100 or the peripheral device 300 to the control device 200 by manipulating the user input interface 230. When the user input interface 230 includes a hard key button, the user may input a command related to the image display apparatus 100 or the peripheral device 300 to the control device 200 by pressing the hard key button. When the user input interface 230 includes a touch-screen, the user may input a command related to the image display apparatus 100 or the peripheral device 300 to the control device 200 by touching a soft key of the touch-screen.

The sensor component 240 may include a gyro sensor 241 and/or an acceleration sensor 243. The gyro sensor 241 may sense information about a movement of the control device 200. For example, the gyro sensor 241 may sense information about an operation of the control device 200 along x, y, and z-axes. The acceleration sensor 243 may sense information about a movement speed of the control device 200. The sensor component 240 may further include a distance sensor (not shown), and thus may sense a distance to the image display apparatus 100.

The output interface 250 may output an image or a voice signal corresponding to a signal received by the image display apparatus 100 or the peripheral device 300 or corresponding to a manipulation of the user input interface 230. The user may recognize whether the image display apparatus 100 or the peripheral device 300 is controlled or whether the user input interface 230 is manipulated by using the output interface 250.

For example, the output interface 250 may include a display module that outputs an image or a sound output module that outputs a sound, a vibration module that generates a vibration, or an LED module that is turned on, when a signal is transmitted/received to/from the image display apparatus 100 or the peripheral device 300 through the wireless communication interface 220 or when the user input interface 230 is manipulated.

The power supplier 260 supplies power to the control device 200. The power supplier 260 may reduce power consumption by stopping power supply when the control device 200 does not move for a predetermined period of time. The power supplier 260 may resume power supply when a predetermined key provided in the control device 200 is manipulated.

The storage 270 may store various types of programs and application data needed to control or operate the control device 200.

The storage 270 according to an exemplary embodiment may store remote control code information corresponding to external devices.

The controller 280 controls overall operations for controlling the control device 200. The controller 280 may transmit a signal corresponding to a manipulation of a predetermined key of the user input interface 230 or a signal corresponding to a movement of the control device 200 that is sensed by the sensor component 240 to the image display apparatus 100 or the peripheral device 300 through the wireless communication interface 220.

The controller 280 according to an exemplary embodiment may register remote control code information corresponding to the peripheral device 300 and may transmit a control signal to the peripheral device 300. Storage 270 may be a memory and the controller 280 may be a processor or a microprocessor according to an exemplary embodiment.

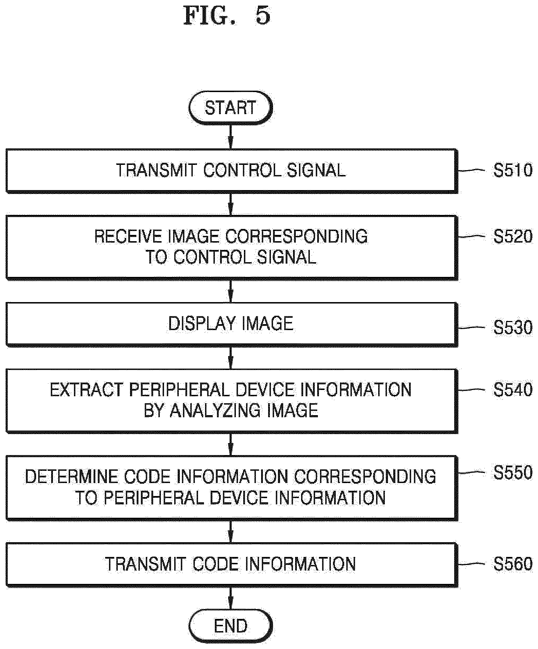

FIG. 5 is a flowchart illustrating a method of operating the image display apparatus 100 according to an exemplary embodiment.

Referring to FIG. 5, in operation S510, the image display apparatus 100 according to an exemplary embodiment may transmit a control signal for controlling the peripheral device 300 that is connected to the image display apparatus 100.

For example, the image display apparatus 100 may transmit a control signal to the control device 200 or the peripheral device 300 by performing a wireless communication method. In this case, examples of the wireless communication method may include, but not limited to, IR, Bluetooth, BLE, ultrasound, ZigBee, and Wi-Fi. Alternatively, the image display apparatus 100 may transmit a control signal to the peripheral device 300 through an HDMI-CEC cable.

When the image display apparatus 100 transmits a control signal to the control device 200, the control signal may include a specific key call command related to a specific key included in the control device 200. Examples of the specific key may include, but not limited to, a menu key, an info-key, and a broadcast guide key.

Alternatively, when the image display apparatus 100 transmits a control signal to the peripheral device 300, the control signal may include, but not limited to, a signal for controlling a menu screen or a broadcast guide screen supported by the peripheral device 300 to be displayed.

The image display apparatus 100 may continuously transmit a control signal until a change in an image displayed on the display 130 is detected.

When the image display apparatus 100 transmits a control signal to the control device 200, the image display apparatus 100 may change remote control code information and may transmit the changed remote control code information to the control device 200. The control device 200 according to an exemplary embodiment may transmit a specific key signal to the peripheral device 300 by using the changed remote control code information.

In operation S520, the image display apparatus 100 may receive an image signal corresponding to the control signal from the peripheral device 300.

For example, when the peripheral device 300 receives a control signal for requesting for a menu screen, an info-screen, or a broadcast guide screen from the control device 200 or the image display apparatus 100, the peripheral device 300 may transmit an image signal corresponding to the menu screen, the info-screen, or the broadcast guide screen to the image display apparatus 100 in response to the control signal.

In operation S530, the image display apparatus 100 may display an image received from the peripheral device 300.

In operation S540, the image display apparatus 100 may extract peripheral device information by analyzing the displayed image.

For example, the image display apparatus 100 may recognize at least one from among text, a logo, and a picture included in the image. The image display apparatus 100 may extract the peripheral device information based on the recognized at least one from among the text, the log, and the picture. For example, the image display apparatus 100 may extract a manufacturer, a business name, or a model name corresponding to the recognized at least one from among the text, the logo, and the picture. In this case, the at least one from among the text, the logo, and the picture corresponding to the peripheral device 300 may be stored in a DB of the image display apparatus 100.

In operation S550, the image display apparatus 100 may determine remote control code information corresponding to the peripheral device information by referencing a knowledge database.

The image display apparatus 100 according to an exemplary embodiment may store remote control code information corresponding to one or more external devices in the DB of a storage. For example, at least one of a manufacturer, a business name, and a model name of an external device may be matched to remote control code information and a matching result may be stored. The image display apparatus 100 may extract the remote control code information corresponding to the peripheral device information from among the stored pieces of remote control code information. In this case, when the remote control code information corresponding to the peripheral device 300 is not stored in the storage, the image display apparatus 100 may request an external server for the remote control code information corresponding to the peripheral device 300 and may receive the remote control code information.

In operation S560, the image display apparatus 100 may transmit the determined remote control code information to the control device 200.

The control device 200 may receive the remote control code information and may register the received remote control code information to the control device 200. When the remote control code information corresponding to the peripheral device 300 is registered to the control device 200, the control device 200 may control the peripheral device 300.

The control device 200 according to an exemplary embodiment may previously receive one or more pieces of remote control code information from the image display apparatus 100 or the external server and may store the one or more pieces of remote control code information. When the remote control code information corresponding to the peripheral device 300 is previously stored in the control device 200, the image display apparatus 100 may transmit, to the control device 200, a control command to the control device 200 so that the remote control code information corresponding to the peripheral device 300 is registered.

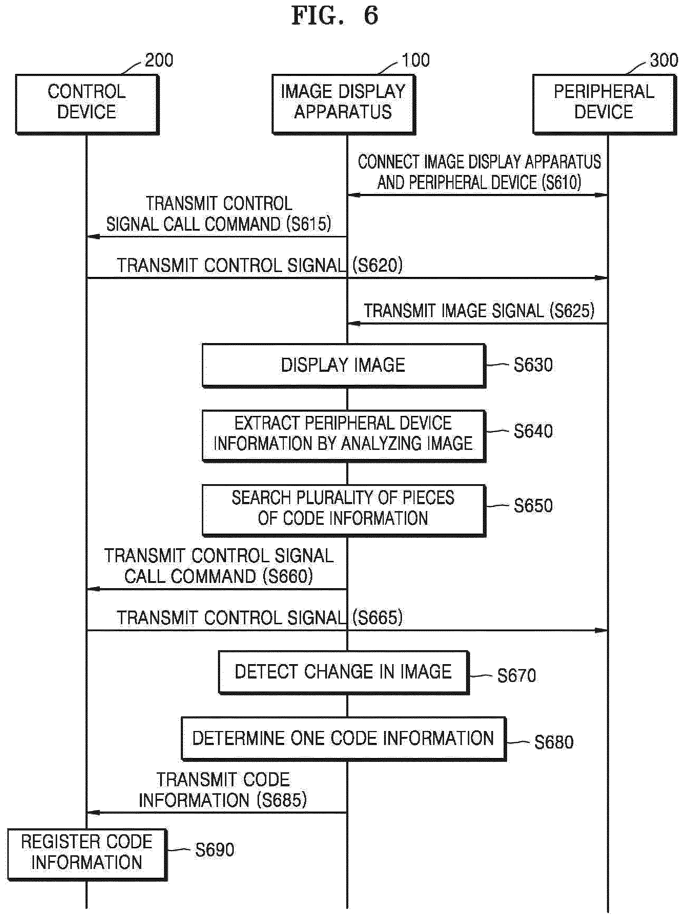

FIG. 6 is a flowchart illustrating a method of setting a universal remote control in order to control the image display apparatus 100 and the peripheral device 300 by using one control device 200 according to an exemplary embodiment.

Referring to FIG. 6, in operation S610, the image display apparatus 100 and the peripheral device 300 may be connected to each other through a wired/wireless network. For example, the image display apparatus 100 and the peripheral device 300 may be connected to each other through an HDMI cable or an HDMI-CEC cable. Also, the image display apparatus 100 and the peripheral device 300 may be connected to each other by using a wireless communication method such as Bluetooth, BLE, ZigBee, or Wi-Fi.

In operation S615, the image display apparatus 100 may transmit a control signal call command to the control device 200.

For example, the image display apparatus 100 may transmit a specific key call command related to a specific key included in the control device 200 to the control device 200. Examples of the specific key may include, but not limited to, a menu key, an info-key, and a broadcast guide key.

The image display apparatus 100 may continuously transmit a control signal call command until a change in an image displayed on the display 130 is detected. In this case, the image display apparatus 100 may change remote control code information and may transmit the changed remote control code information to the control device 200.

In operation S620, the control device 200 may transmit a specific key signal (e.g., a control signal) to the peripheral device 300. In operation S625, the peripheral device 300 may transmit an image signal corresponding to the menu screen, the info-screen, or the broadcast guide screen to the image display apparatus 100 in response to the received specific key signal.

In operation S630, the image display apparatus 100 may display an image based on the image signal received from the peripheral device 300.

In operation S640, the image display apparatus 100 may extract peripheral device information by analyzing the image.

For example, the image display apparatus 100 may recognize at least one from among text, a logo, and a picture included in the image, and may extract the peripheral device information based on the recognized at least one from among the text, the logo, and the picture. The image display apparatus 100 may extract a manufacturer or a business name of the peripheral device 300. In an exemplary embodiment, by way of an example, the image display apparatus may extract the peripheral device information by using image recognition techniques known in the art.

The image display apparatus 100 may determine remote control code information corresponding to the peripheral device information. In operation S650, the image display apparatus 100 may extract the remote control code information corresponding to the peripheral device information from among a plurality of pieces of remote control code information that are stored.

The image display apparatus 100 may transmit a control signal call command to the control device 200 for each of the plurality of pieces of remote control code information, in operation S660. In this case, the image display apparatus 100 may transmit the plurality of pieces of remote control code information to the control device 200.

The control device 200 may transmit a control signal to the peripheral device 300 based on each of the plurality of pieces of remote control code information, in operation S665. In this case, in operation S670, the image display apparatus 100 may detect whether the image displayed on a display is changed.

In operation S680, the image display apparatus 100 may determine remote control code information that is detected to make the image change as the remote control code information corresponding to the peripheral device 300.

When the remote control code information is determined, in operation S685, the image display apparatus 100 may transmit the remote control code information to the control device 200.

In operation S690, the control device 200 may receive the remote control code information and may register the received remote control code information in the control device 200. When the remote control code information corresponding to the peripheral device 300 is registered in the control device 200, the control device 200 may control the peripheral device 300.

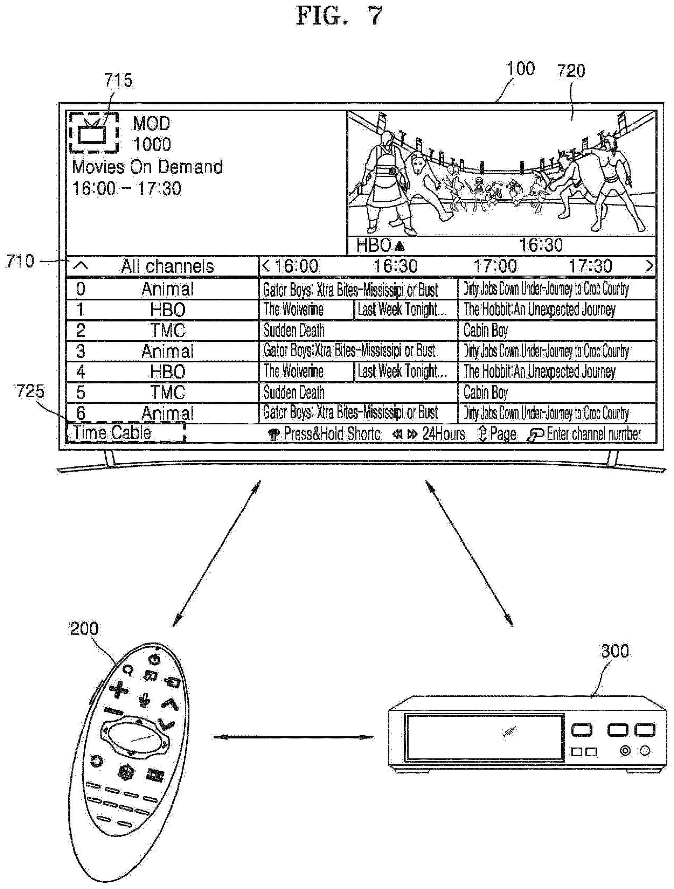

FIG. 7 is a view illustrating a method of setting a universal remote control or controller according to an exemplary embodiment.

Referring to FIG. 7, the image display apparatus 100 according to an exemplary embodiment may transmit a control signal call command to the control device 200 by performing a wireless communication method. In this case, examples of the wireless communication method may include, but not limited to, IR, Bluetooth, BLE, ultrasound, ZigBee, or Wi-Fi.

A control signal called by the control device 200 may be a specific key signal related to a specific key. Examples of the specific key may include, but not limited to, a menu key, an info-key, and a broadcast guide key.

The control device 200 may transmit a control signal to the peripheral device 300 by performing a wireless communication method. In this case, examples of the wireless communication method may include, but not limited to, IR, Bluetooth, BLE, ultrasound, ZigBee, and Wi-Fi.

The peripheral device 300 may transmit an image signal corresponding to the control signal to the image display apparatus 100. For example, when the control device 200 transmits a broadcast guide key signal to the peripheral device 300, the peripheral device 300 may transmit an image signal corresponding to a broadcast guide screen to the image display apparatus 100. Alternatively, when the control device 200 transmits an info-key signal to the peripheral device 300, the peripheral device 300 may transmit an image signal corresponding to an info-screen to the image display apparatus 100.

The image display apparatus 100 may display an image based on the image signal received from the peripheral device 300. As shown in FIG. 7, the image display apparatus 100 may display a broadcast guide screen 710.

The image display apparatus 100 may analyze the displayed image. For example, as shown in FIG. 7, the image display apparatus 100 may recognize at least one from among text 725, a logo 715, and a picture 720 included in the displayed image.

Also, the image display apparatus 100 may extract peripheral device information based on the recognized at least one from among the text 725, the logo 715, and the picture 720. For example, the image display apparatus 100 may extract manufacturer or business information of the peripheral device 300 corresponding to the recognized text 725 or logo 715.

The image display apparatus 100 according to an exemplary embodiment may search for remote control code information corresponding to the manufacturer or business information of the peripheral device 300 and may determine remote control code information corresponding to the peripheral device 300.

When the remote control code information is determined, the image display apparatus 100 may transmit the remote control code information to the control device 200.

The control device 200 may register the received remote control code information and may control the peripheral device 300.

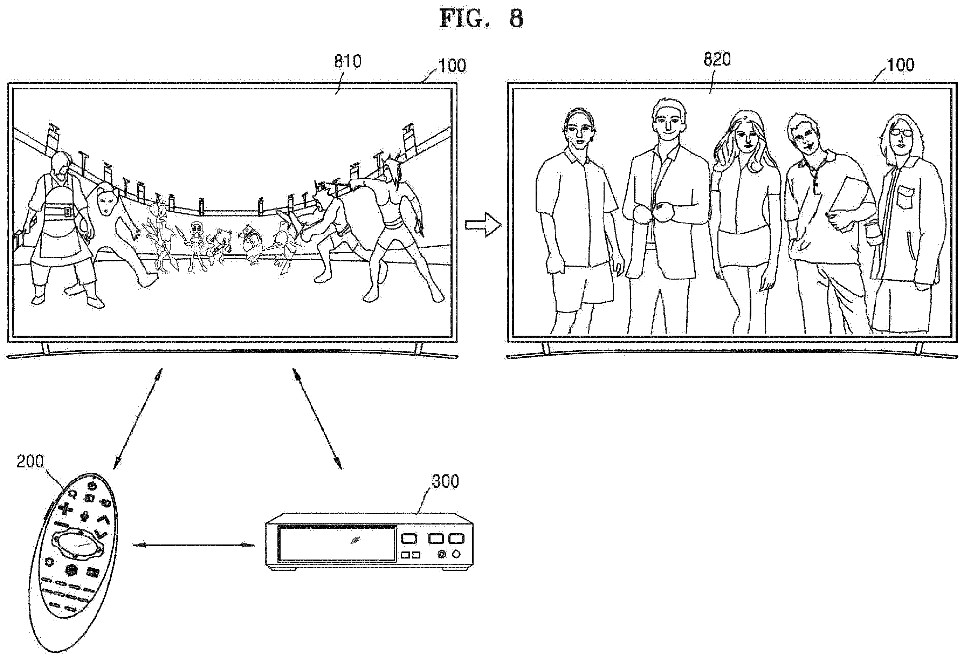

FIG. 8 is a view illustrating a method of setting a universal remote control according to an exemplary embodiment.

FIG. 8 is a view illustrating a method of setting a universal remote control when remote control code information is searched for by using manufacturer information or business information of the peripheral device 300 and there are a plurality of pieces of remote control code information corresponding to the manufacturer or business information of the peripheral device 300 similar to FIG. 7. However, exemplary embodiments are not limited thereto but are provided by way of an example only.

Referring to FIG. 8, the image display apparatus 100 may transmit a control signal call command to the control device 200 for each of the plurality of pieces of remote control code information corresponding to the manufacturer or business information of the peripheral device 300. For example, when the plurality of pieces of remote control code information corresponding to the manufacturer or business information of the peripheral device 300 include first remote control code information, second remote control code information, and third remote control code information, the image display apparatus 100 may transmit a control signal call command for each of the first remote control code information, the second remote control code information, and the third remote control code information.

The control device 200 may transmit a called control signal to the peripheral device 300 based on each of the first through third remote control code information. For example, the control device 200 may transmit a control signal to the peripheral device 300 based on the first remote control code information. Also, the control device 200 may transmit a control signal to the peripheral device 300 based on each of the second remote control code information and the third remote control code information.

In this case, examples of the control signal may include, but not limited to, a channel change key signal, a power on/off key signal, and an image input/output signal.

The image display apparatus 1200 may detect whether an image displayed on a display is changed. For example, as shown in FIG. 8, when a first channel image 810 displayed on the display is changed into a second channel image 820 in response to a channel change key signal, the image display apparatus 100 may determine remote control code information that is detected to make the image change as remote control code information corresponding to the peripheral device 300.

When the remote control code information is determined, the image display apparatus 100 may transmit the remote control code information to the control device 200. The control device 200 may register the received remote control code information and may control the peripheral device 300.

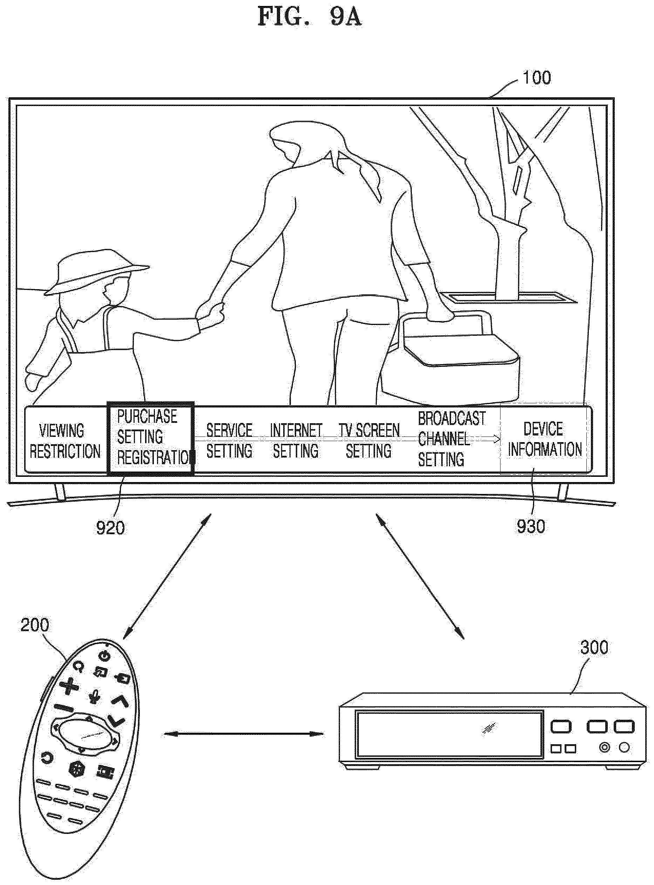

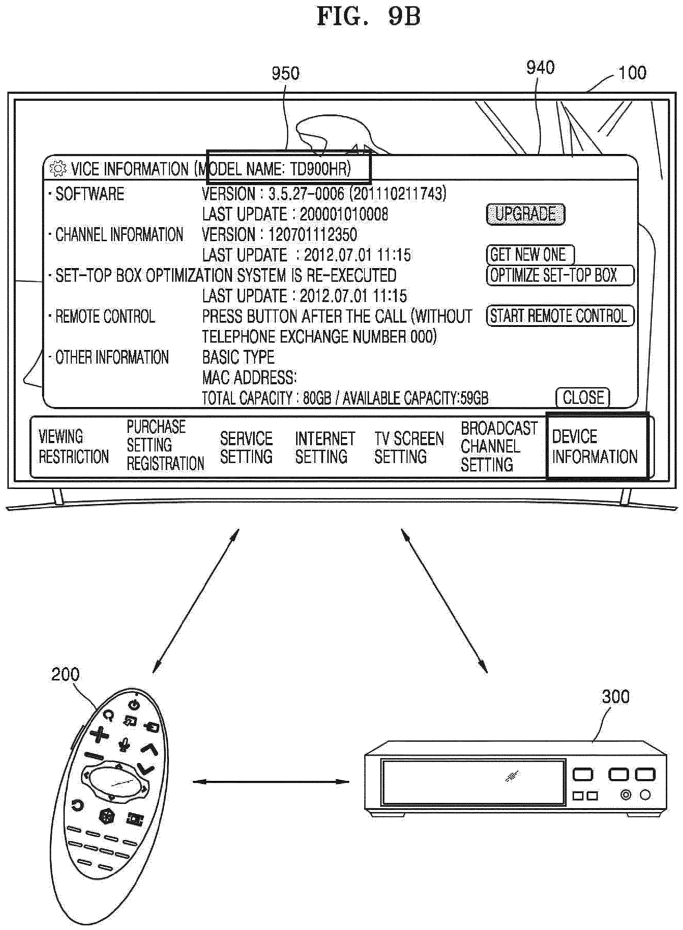

FIGS. 9A and 9B are views illustrating a method of setting a universal remote control according to an exemplary embodiment.

FIGS. 9A and 9B are views illustrating a method of setting a universal remote control by detecting a model name of the peripheral device 300 when remote control code information is searched for by using manufacturer information or business information of the peripheral device 300, and there are a plurality of pieces of remote control code information corresponding to the manufacturer information or business information of the peripheral device 300 similar to FIG. 7 or there are a plurality of pieces of remote control code information that are detected to make an image change like in FIG. 8. However, exemplary embodiments are not limited thereto and are provided by way of an example only.

Referring to FIGS. 9A and 9B, the image display apparatus 100 may recognize or detect a focus 920 and a menu item (hereinafter, referred to as a "device information item" 930) for displaying peripheral device information by analyzing an image displayed on a display. The image display apparatus 100 may transmit a control signal (e.g., direction key signal) call command for moving the focus 920 to the device information item 930 to the control device 200. In this case, a control signal call command may be transmitted to the control device 200 for each of a plurality of pieces of remote control code information.

For example, as shown in FIG. 9A, the image display apparatus 100 may recognize or detect the device information item 930 and a current position of the focus 920, and may transmit a right arrow key signal call command to the control device 200 in order to move the focus 920 to the device information item 930. The control device 200 may transmit a right arrow key signal to the peripheral device 300.

The image display apparatus 100 may continuously analyze the image displayed on the display 120 and may transmit an OK key call command to the control device 200 when the focus 920 is located at the device information item 930.

The control device 200 may transmit an OK key signal to the peripheral device 300, and the peripheral device 200 may transmit an image signal corresponding to a device information menu screen 940 to the image display apparatus 100 in response to the OK key signal, as shown in FIG. 9B. The image display apparatus 100 may display the device information menu screen 940 as shown in FIG. 9B.

When the device information menu screen 940 is displayed, the image display apparatus 100 may recognize text or a picture included in the device information menu screen 940 and may extract a model name 950 of the peripheral device 300.

The image display apparatus 100 may determine remote control code information of the peripheral device 300 based on the model name and manufacturer or business information of the peripheral device 300. For example, the image display apparatus 100 may search for remote control code information corresponding to the model name and the manufacturer or business information of the peripheral device 300 from among pieces of remote control code information that are stored in a database (DB), which may be external or internal to the image display apparatus 100.

When the remote control code information is determined, the image display apparatus 100 may transmit the remote control code information to the control device 200. The control device 200 may register the received remote control code information and may control the peripheral device 300.

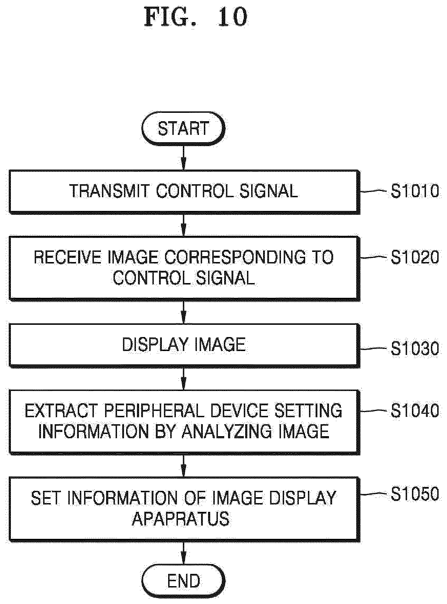

FIG. 10 is a flowchart illustrating a method of operating the image display apparatus 100 according to an exemplary embodiment.

Referring to FIG. 10, in operation S1010, the image display apparatus 100 may transmit a control signal for displaying setting information of the peripheral device 300 connected to the image display apparatus 100 on the display 130.

For example, the image display apparatus 100 may transmit a control signal to the control device 200 or the peripheral device 300 by performing a wireless communication method. In this case, examples of the wireless communication method may include, but not limited to, IR, Bluetooth, BLE, ultrasound, ZigBee, and Wi-Fi. Alternatively, the image display apparatus 100 may transmit a control signal to the peripheral device 300 through an HDMI-CEC cable.

When the image display apparatus 100 transmits a control signal to the control device 200, the control signal may include a specific key call command related to a specific key included in the control device 200. Examples of the specific key may include, but not limited to, a menu key, an info-key, and a broadcast guide key.

Also, the image display apparatus 100 may recognize an item for moving a focus included in a displayed image to a setting information screen of the peripheral device 300 and may transmit a direction key call command for moving the focus to the control device 200.

Alternatively, when the image display apparatus 100 transmits a control signal to the peripheral device 300, the control signal may include, but not limited to, a signal for controlling a menu screen, a broadcast guide screen, or a screen including the setting information of the peripheral device 300, which are supported by the peripheral device 300, to be displayed.

In operation S1020, the image display apparatus 100 may receive an image signal corresponding to the control signal from the peripheral device 300.

In operation S1030, the image display apparatus 100 may display an image received from the peripheral device 300. For example, the image display apparatus 100 may display a screen including the setting information of the peripheral device 300.

In operation S1040, the image display apparatus 100 may extract the setting information of the peripheral device 300 by analyzing the image. For example, the image display apparatus 100 may extract Internet setting information or region information of the peripheral device 300 by recognizing text or a picture included in the displayed image.

In operation S1050, the image display apparatus 100 may set the extracted setting information of the peripheral device 300 as information of the image display apparatus 100. For example, the image display apparatus 100 may set the Internet information of the peripheral device 300 as Internet information of the image display apparatus 100 and may set the region information of the peripheral device 300 as region information of the image display apparatus 100.

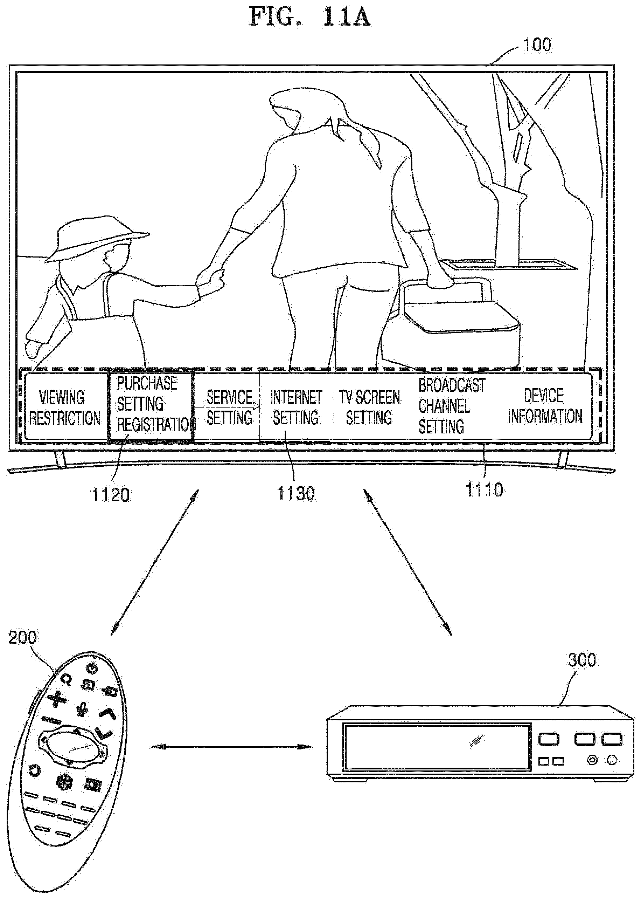

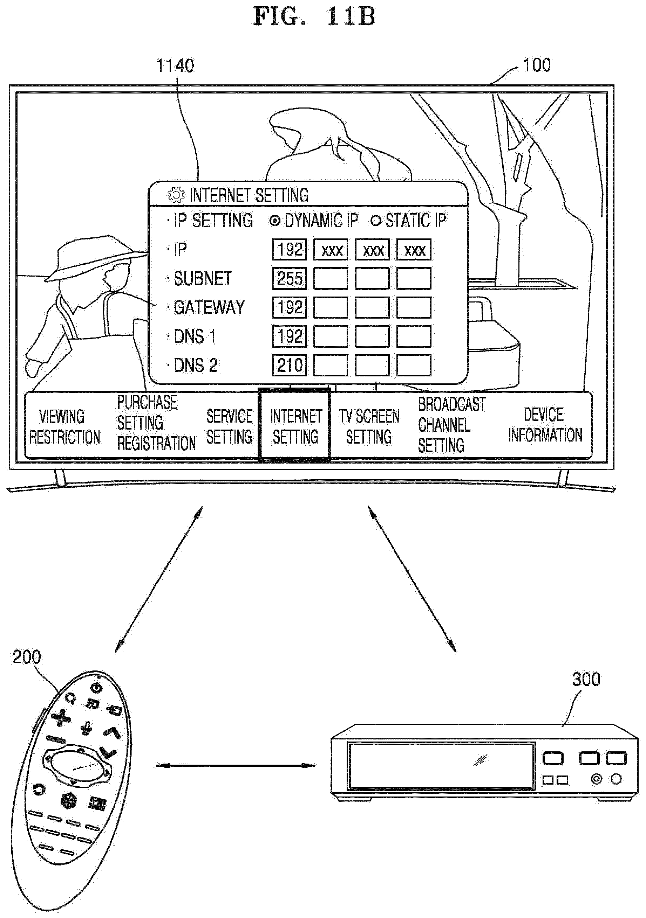

FIGS. 11A and 11B are views illustrating a process of setting Internet information of the image display apparatus 100 according to an exemplary embodiment.

Referring to FIG. 11A, the image display apparatus 100 according to an exemplary embodiment may display a list (hereinafter, referred to as a setting menu 1110) including items for displaying setting information of the peripheral device 300 connected to the image display apparatus 100.

For example, the image display apparatus 100 may transmit a control signal call command to the control device 200 so that the setting menu 1110 of the peripheral device 300 is displayed, and the control device 200 may transmit a control signal to the peripheral device 300. The peripheral device 300 may transmit an image signal corresponding to the setting menu 1110 to the image display apparatus 100, and as shown in FIG. 11A, the image display apparatus 100 may display a screen including the setting menu 1110.

Referring to FIG. 11A, the image display apparatus 100 may analyze an image displayed on a display, and may recognize a focus 1120 and setting information items (e.g., purchase setting registration, service setting, Internet setting, TV screen setting, broadcast channel setting, and device information) of the peripheral device 300.

The image display apparatus 100 may transmit a control signal (e.g., direction key signal) call command for moving the focus 1120 to an Internet setting item 1130 to the control device 200.

The image display apparatus 100 may continuously analyze the image displayed on the display, and may transmit an OK key call command to the control device 200 when the focus 1120 is located at the Internet setting item 1130.

The control device 200 may transmit an OK key signal to the peripheral device 300, and the peripheral device 300 may transmit an image signal corresponding to an Internet setting screen 1140 to the image display apparatus 100 in response to the OK key signal. The image display apparatus 100 may display the Internet setting screen 1140, as shown in FIG. 11B.

When the Internet setting screen 1140 is displayed, the image display apparatus 100 may recognize text or a picture included in the Internet setting screen 1140 and may extract Internet setting information (e.g., IP information) of the peripheral device 300.

The image display apparatus 100 may set the extracted Internet setting information as Internet information of the image display apparatus 100.

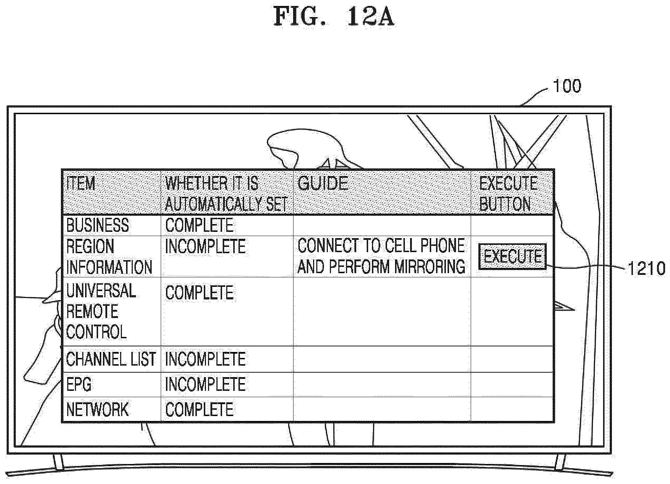

FIGS. 12A through 12C are views illustrating a process of setting region information of the image display apparatus 100 according to an exemplary embodiment.

Referring to FIG. 12A, the image display apparatus 100 according to an exemplary embodiment may display whether setting information items of the image display apparatus 100 are automatically set.

Also, the image display apparatus 100 according to an exemplary embodiment may automatically transmit a control signal to the peripheral device 300 and may provide a guide screen for items (e.g., region information) whose setting information is difficult to be extracted.

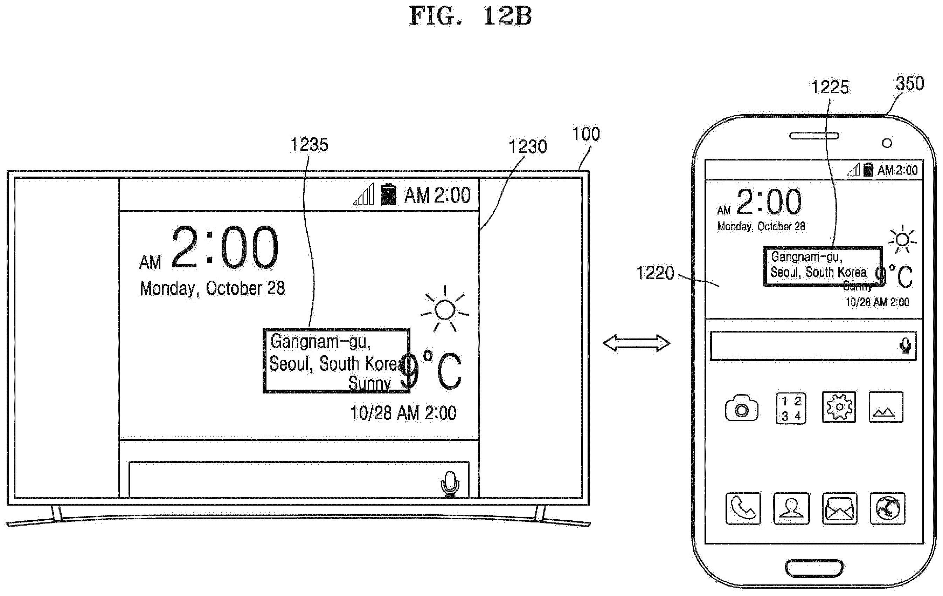

For example, the image display apparatus 100 may display guide content (e.g., "connect to a cell phone and perform mirroring") in order to set region information from among pieces of setting information. In this case, when a user input of pressing an execute button 1210 is detected, the image display apparatus 100 may perform mirroring on a peripheral device 350 (e.g., a cell phone) connected to the image display apparatus 100, as shown in FIG. 12B.

The peripheral device 350 according to an exemplary embodiment may be a device including a position sensor (e.g., global positioning system (GPS)), and region information 1225 (e.g., Gangnam-gu, Seoul, South Korea) may be included in an image 1220 displayed on the peripheral device 350. When mirroring is performed, the same image as the image displayed on the peripheral device 350 may be displayed on the image display apparatus 100, as shown in FIG. 12B. For example, an image 1330 displayed on the image display apparatus 100 may include region information 1235 of the peripheral device 350.

When a mirroring image is displayed, the image display apparatus 100 may extract region information of the peripheral device 350 by analyzing the mirroring image. Also, the image display apparatus 100 may set the extracted region information as region information of the image display apparatus 100.

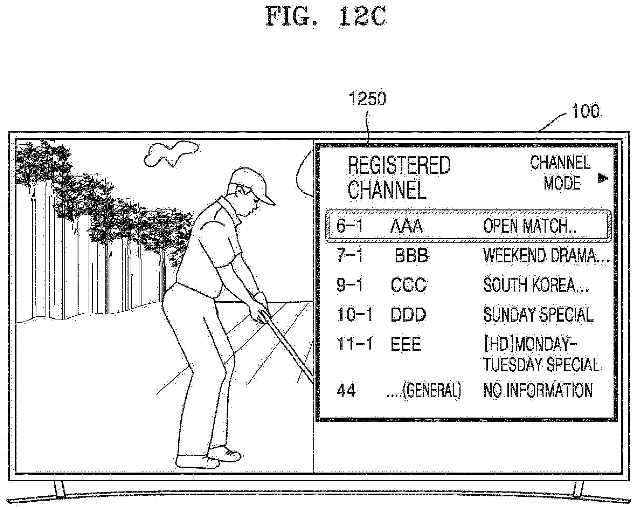

Referring to FIG. 12C, the image display apparatus 100 may automatically generate a channel list 1250 or EPG information based on the set region information.

According to an exemplary embodiment, an image display apparatus may conveniently set a universal remote control by automatically transmitting a control signal to a peripheral device and analyzing a resultant image corresponding to the control signal.

According to an exemplary embodiment, information of the image display apparatus may be automatically set based on extracted setting information of the peripheral device.

A method of operating an image display apparatus according to an exemplary embodiment may be implemented as computer instructions which may be executed by various computer means, and recorded on a computer-readable recording medium. The computer-readable recording medium may include program commands, data files, data structures, or a combination thereof. The program commands recorded on the computer-readable recording medium may be specially designed and constructed for the inventive concept or may be known to and usable by one of ordinary skill in the field of computer software. Examples of the computer-readable recording medium include storage media such as magnetic media (e.g., hard discs, floppy discs, or magnetic tapes), optical media (e.g., compact disc-read only memories (CD-ROMs), or DVDs), magneto-optical media (e.g., floptical discs), and hardware devices that are specially configured to store and carry out program commands (e.g., ROMs, RAMs, or flash memories). Examples of the program commands include a high-level language code that may be executed by a computer using an interpreter as well as a machine language code made by a compiler.

While exemplary embodiments have been particularly shown and described with reference to drawings, they are provided for the purposes of illustration and it will be understood by one of ordinary skill in the art that various modifications and equivalent other exemplary embodiments may be made. The foregoing exemplary embodiments are merely exemplary and are not to be construed as limiting. The description of exemplary embodiments is intended to be illustrative, and not to limit the scope of the claims and their equivalents, and many alternatives, modifications, and variations will be apparent to those skilled in the art.

## Claims

1. An image display apparatus (100) comprising:
a communication interface (110);
a display (130); and
a controller (120) configured to:
control the communication interface to transmit a control signal for controlling a peripheral device (300) connected to the image display apparatus and receive an image corresponding to the control signal from the peripheral device;
extract peripheral device information by analyzing the image and determine remote control code information corresponding to the peripheral device based on the extracted peripheral device information; and
control the communication interface to transmit the determined remote control code information to a control device (200),
wherein the remote control code information corresponding to the peripheral device comprises a key code set usable by the control device to control the peripheral device.

2. The image display apparatus of claim 1, wherein the control signal for controlling the peripheral device is a signal for displaying, on the display, the image comprising the peripheral device information.

3. The image display apparatus of claim 1 or 2, wherein the communication interface is further configured to transmit the control signal to one of the control device and the peripheral device.

4. The image display apparatus of any one of claims 1 to 3, wherein the controller is further configured to detect at least one of text, a logo, and a picture, in the image and extract the peripheral device information based on the detected at least one of the text, the logo, and the picture, and
wherein the peripheral device information comprises at least one of a manufacturer name of the peripheral device, a business name of the peripheral device, and a model name of the peripheral device.

5. The image display apparatus of any one of claims 1 to 4, further comprising a memory (490) configured to store the remote control code information corresponding to the peripheral device.

6. The image display apparatus of any one of claims 1 to 5, wherein the controller is further configured to detect a change in the image displayed on the display and determine the remote control code information corresponding to the peripheral device, based on the detected change in the image.

7. The image display apparatus of any one of claims 1 to 6, wherein the controller is further configured to detect, in the image, a menu item (930) for displaying the peripheral device information, transmit, to the control device, a control signal for moving a focus (920) displayed on the display to the menu item.

8. The image display apparatus of any one of claims 1 to 7, wherein the controller is further configured to extract setting information of the peripheral device by analyzing the image and set information of the image display apparatus based on the extracted setting information of the peripheral device.

9. A method of operating an image display apparatus (100), the method comprising:
transmitting a control signal for controlling a peripheral device (300) connected to the image display apparatus;
receiving an image corresponding to the control signal from the peripheral device; displaying the received image;
extracting, by a processor (120), peripheral device information by analyzing the received image;
determining, by the processor, remote control code information corresponding to the peripheral device based on the extracted peripheral device information; and
transmitting the determined remote control code information to a control device (200),
wherein the remote control code information corresponding to the peripheral device comprises a key code set usable by the control device to control the peripheral device.

10. The method of claim 9, wherein the control signal for controlling the peripheral device is a signal for displaying, on a display (130), the image comprising the peripheral device information.

11. The method of claim 9 or 10, wherein the transmitting the control signal comprises transmitting the control signal to one of the control device and the peripheral device.

12. The method of any one of claims 9 to 11, wherein the extracting the peripheral device information comprises:
detecting at least one of text, a logo, and a picture, in the image; and
extracting the peripheral device information based on the detected at least one of the text, the logo, and the picture,
wherein the peripheral device information comprises at least one of a manufacturer name, a business name, and a model name of the peripheral device.

13. The method of any one of claims 9 to 12, further comprising storing, in a memory (490), the remote control code information corresponding to the peripheral device.

14. The method of any one of claims 9 to 13, further comprising:
detecting a change in the image displayed on a display; and
determining the remote control code information corresponding to the peripheral device, based on the detected change in the image.

15. The method of any one of claims 9 to 14, further comprising:
detecting, in the image, a menu item (930) for displaying the peripheral device information; and
transmitting, to the control device, a control signal for moving a focus (920) to the menu item displayed on a display.

## Patentansprüche

1. Image-Anzeigevorrichtung (100), die Folgendes umfasst:
eine Kommunikationsschnittstelle (110);
ein Display (130); und
eine Steuerung (120), konfiguriert zum:
Steuern der Kommunikationsschnittstelle zum Übertragen eines Steuersignals zum Steuern eines an die Image-Anzeigevorrichtung angeschlossenen Peripheriegeräts (300) und zum Empfangen eines Image entsprechend dem Steuersignal von dem Peripheriegerät;
Extrahieren von Peripheriegerätinformationen durch Analysieren des Image und Bestimmen von Fernsteuercode-Informationen entsprechend dem Peripheriegerät auf der Basis der extrahierten Peripheriegerätinformationen; und
Steuern der Kommunikationsschnittstelle zum Übertragen der bestimmten Fernsteuercode-Informationen zu einem Steuergerät (200),
wobei die Fernsteuercode-Informationen entsprechend dem Peripheriegerät einen Schlüsselcode-Satz umfassen, der vom Steuergerät zum Steuern des Peripheriegeräts benutzt werden kann.

2. Image-Anzeigevorrichtung nach Anspruch 1, wobei das Steuersignal zum Steuern des Peripheriegeräts ein Signal zum Anzeigen, auf dem Display, des die Peripheriegerätinformationen umfassenden Image ist.

3. Image-Anzeigevorrichtung nach Anspruch 1 oder 2, wobei die Kommunikationsschnittstelle ferner zum Übertragen des Steuersignals zu dem Steuergerät oder dem Peripheriegerät konfiguriert ist.

4. Image-Anzeigevorrichtung nach einem der Ansprüche 1 bis 3, wobei die Steuerung ferner zum Erkennen von wenigstens einem aus Text, einem Logo und einem Bild in dem Image und zum Extrahieren der Peripheriegerätinformationen auf der Basis des erkannten wenigstens einen aus Text, Logo und dem Bild konfiguriert ist, und
wobei die Peripheriegerätinformationen wenigstens eines aus einem Herstellernamen des Peripheriegeräts, einem Geschäftsnamen des Peripheriegeräts und einem Modellnamen des Peripheriegeräts umfassen.

5. Image-Anzeigevorrichtung nach einem der Ansprüche 1 bis 4, die ferner einen Speicher (490) umfasst, konfiguriert zum Speichern der Fernsteuercode-Informationen entsprechend dem Peripheriegerät.

6. Image-Anzeigevorrichtung nach einem der Ansprüche 1 bis 5, wobei die Steuerung ferner zum Erkennen einer Änderung in dem auf dem Display angezeigten Image und zum Bestimmen der Fernsteuercode-Informationen entsprechend dem Peripheriegerät auf der Basis der erkannten Änderung in dem Image konfiguriert ist.

7. Image-Anzeigevorrichtung nach einem der Ansprüche 1 bis 6, wobei die Steuerung ferner zum Erkennen, in dem Image, eines Menügegenstands (930) zum Anzeigen der Peripheriegerätinformationen, zum Übertragen eines Steuersignals zu dem Steuergerät zum Bewegen eines auf dem Display angezeigten Fokus (920) zu dem Menügegenstand konfiguriert ist.

8. Image-Anzeigevorrichtung nach einem der Ansprüche 1 bis 7, wobei die Steuerung ferner zum Extrahieren von Einstellinformationen des Peripheriegeräts durch Analysieren des Image und zum Einstellen von Informationen der Image-Anzeigevorrichtung auf der Basis der extrahierten Einstellinformationen des Peripheriegeräts konfiguriert ist.

9. Verfahren zum Betreiben einer Image-Anzeigevorrichtung (100), wobei das Verfahren Folgendes beinhaltet:
Übertragen eines Steuersignals zum Steuern eines an das Image-Anzeigevorrichtung angeschlossenen Peripheriegeräts (300),
Empfangen eines Image entsprechend dem Steuersignal von dem Peripheriegerät; Anzeigen des empfangenen Image;
Extrahieren, durch einen Prozessor (120), von Peripheriegerätinformationen durch Analysieren des empfangenen Image;
Bestimmen, durch den Prozessor, von Fernsteuercode-Informationen entsprechend dem Peripheriegerät auf der Basis der extrahierten Peripheriegerätinformationen; und
Übertragen der bestimmten Fernsteuercode-Informationen zu einem Steuergerät (200),
wobei die Fernsteuercode-Informationen entsprechend dem Peripheriegerät einen Schlüsselcode-Satz umfassen, der vom Steuergerät zum Steuern des Peripheriegeräts benutzt werden kann.

10. Verfahren nach Anspruch 9, wobei das Steuersignal zum Steuern des Peripheriegeräts ein Signal zum Anzeigen, auf einem Display (130), des Image ist, das die Peripheriegerätinformationen umfasst.

11. Verfahren nach Anspruch 9 oder 10, wobei das Übertragen des Steuersignals das Übertragen des Steuersignals zu dem Steuergerät oder dem Peripheriegerät umfasst.

12. Verfahren nach einem der Ansprüche 9 bis 11, wobei das Extrahieren der Peripheriegerätinformationen Folgendes beinhaltet:
Erkennen wenigstens eines aus Text, einem Logo und einem Bild in dem Image; und
Extrahieren der Peripheriegerätinformationen auf der Basis des erkannten wenigstens einen aus Text, Logo und Bild,
wobei die Peripheriegerätinformationen wenigstens eines aus einem Herstellernamen, einem Geschäftsnamen und einem Modellnamen des Peripheriegeräts umfassen.

13. Verfahren nach einem der Ansprüche 9 bis 12, das ferner das Speichern, in einem Speicher (490), der Fernsteuercode-Informationen entsprechend dem Peripheriegerät beinhaltet.

14. Verfahren nach einem der Ansprüche 9 bis 13, das ferner Folgendes beinhaltet:
Erkennen einer Änderung in dem auf einem Display angezeigten Image; und
Bestimmen der Fernsteuercode-Informationen entsprechend dem Peripheriegerät auf der Basis der erkannten Änderung in dem Image.

15. Verfahren nach einem der Ansprüche 9 bis 14, das ferner Folgendes beinhaltet:
Erkennen, in dem Image, eines Menügegenstands (930) zum Anzeigen der Peripheriegerätinformationen; und
Übertragen, zu dem Steuergerät, eines Steuersignals zum Bewegen eines Fokus (920) zu dem auf einem Display angezeigten Menügegenstand.

## Revendications

1. Appareil d'affichage d'images (100) comprenant :
une interface de communication (110) ;
un afficheur (130) ; et
un contrôleur (120) configuré de façon à :
commander l'interface de communication afin de transmettre un signal de commande pour commander un dispositif périphérique (300) connecté à l'appareil d'affichage d'images et de recevoir une image correspondant au signal de commande à partir du dispositif périphérique ;
extraire des informations de dispositif périphérique grâce à l'analyse de l'image et déterminer des informations de code de commande à distance correspondant au dispositif périphérique sur la base des informations de dispositif périphérique ayant été extraites ; et
commander l'interface de communication afin de transmettre les informations de code de commande à distance ayant été déterminées à un dispositif de commande (200),
les informations de code de commande à distance correspondant au dispositif périphérique comprenant un ensemble de codes clés utilisables par le dispositif de commande pour commander le dispositif périphérique.

2. Appareil d'affichage d'images de la revendication 1, dans lequel le signal de commande pour commander le dispositif périphérique est un signal pour afficher, sur l'afficheur, l'image comprenant les informations de dispositif périphérique.

3. Appareil d'affichage d'images de la revendication 1 ou 2, dans lequel l'interface de communication est configurée en outre de façon à transmettre le signal de commande à un dispositif parmi le dispositif de commande et le dispositif périphérique.

4. Appareil d'affichage d'images de l'une quelconque des revendications 1 à 3, dans lequel le contrôleur est configuré en outre de façon à détecter au moins un élément parmi un texte, un logo et une photo, dans l'image et à extraire les informations de dispositif périphérique sur la base de l'au moins un élément détecté parmi le texte, le logo et la photo, et
dans lequel les informations de dispositif périphérique comprennent au moins un nom parmi le nom d'un fabricant du dispositif périphérique, un nom commercial du dispositif périphérique, et un nom de modèle du dispositif périphérique.

5. Appareil d'affichage d'images de l'une quelconque des revendications 1 à 4, comprenant en outre une mémoire (490) configurée de façon à stocker des informations de code de commande à distance correspondant au dispositif périphérique.

6. Appareil d'affichage d'images de l'une quelconque des revendications 1 à 5, dans lequel le contrôleur est configuré en outre de façon à détecter un changement dans l'image affichée sur l'afficheur et à déterminer les informations de code de commande à distance correspondant au dispositif périphérique, sur la base du changement détecté dans l'image.

7. Appareil d'affichage d'images de l'une quelconque des revendications 1 à 6, dans lequel le contrôleur est configuré en outre de façon à détecter, dans l'image, une rubrique de menu (930) pour afficher les informations de dispositif périphérique, à transmettre, au dispositif de commande, un signal de commande pour déplacer un point focal (920) affiché sur l'afficheur vers la rubrique de menu.

8. Appareil d'affichage d'images de l'une quelconque des revendications 1 à 7, dans lequel le contrôleur est configuré en outre de façon à extraire des informations de réglage du dispositif périphérique grâce à l'analyse de l'image et à définir des informations de l'appareil d'affichage d'images sur la base des informations de réglage ayant été extraites du dispositif périphérique.

9. Procédé permettant d'opérer un appareil d'affichage d'images (100), le procédé comprenant :
la transmission d'un signal de commande pour commander un dispositif périphérique (300) connecté à l'appareil d'affichage d'images ;
la réception d'une image correspondant au signal de commande à partir du dispositif périphérique ;
l'affichage de l'image reçue ;
l'extraction, par un processeur (120), d'informations de dispositif périphérique grâce à l'analyse de l'image reçue ;
la détermination, par le processeur, d'informations de code de commande à distance correspondant au dispositif périphérique sur la base des informations de dispositif périphérique ayant été extraites ; et
la transmission des informations de code de commande à distance ayant été déterminées à un dispositif de commande (200),
dans lequel les informations de code de commande à distance correspondant au dispositif périphérique comprennent un ensemble de codes clés utilisables par le dispositif de commande pour commander le dispositif périphérique.

10. Procédé de la revendication 9, dans lequel le signal de commande pour commander le dispositif périphérique est un signal pour afficher, sur un afficheur (130), l'image comprenant les informations de dispositif périphérique.

11. Procédé de la revendication 9 ou 10, dans lequel la transmission du signal de commande comprend la transmission du signal de commande à un dispositif parmi le dispositif de commande et le dispositif périphérique.

12. Procédé de l'une quelconque des revendications 9 à 11, dans lequel l'extraction des informations de dispositif périphérique comprend :
la détection d'au moins un élément parmi un texte, un logo et une photo, dans l'image ; et
l'extraction des informations de dispositif périphérique sur la base de l'au moins un élément détecté parmi le texte, le logo et la photo,
dans lequel les informations de dispositif périphérique comprennent au moins un nom parmi le nom d'un fabricant, un nom commercial, et un nom de modèle du dispositif périphérique.

13. Procédé de l'une quelconque des revendications 9 à 12, comprenant en outre le stockage, dans une mémoire (490), des informations de code de commande à distance correspondant au dispositif périphérique.

14. Procédé de l'une quelconque des revendications 9 à 13, comprenant en outre :
la détection d'un changement dans l'image affichée sur un afficheur ; et
la détermination des informations de code de commande à distance correspondant au dispositif périphérique, sur la base du changement détecté dans l'image.

15. Procédé de l'une quelconque des revendications 9 à 14, comprenant en outre :
la détection, dans l'image, d'une rubrique de menu (930) pour afficher les informations de dispositif périphérique ; et
la transmission, au dispositif de commande, d'un signal de commande pour déplacer un point focal (920) vers la rubrique de menu affichée sur un afficheur.
